# EUROPEAN PATENT APPLICATION

(11) **EP 3 587 326 A1**
(43) Date of publication of application: **01.01.2020**
(21) Application number: 19183684.0
(22) Date of filing: 01.07.2019
(51) Int. Cl.: B66B 5/00, G06Q 10/00, G06Q 10/06

(54) **MAINTENANCE SCHEDULING BASED ON REMOTE MONITORING DATA AND SERVICE DATA ANALYTICS**

(30) Priority: 29.06.2018 US 201816024130
(71) Applicant: Otis Elevator Company, Farmington, Connecticut 06032 (US)
(72) Inventor: LOVETT, Teems E., East Hartford, CT Connecticut 06108 (US); LIASKAS, Peter, Farmington, CT Connecticut 06032 (US); TRCKA, Nikola, Farmington, CT Connecticut 06032 (US); HIGGINS, Frank, Farmington, CT Connecticut 06032 (US); MAHONEY, Sally Day, Farmington, CT Connecticut 06032 (US)
(74) Representative: Dehns

(57) **Abstract**

Embodiments include a system and method for scheduling maintenance based on remote monitoring data and service data analytics. The embodiments include a controller configured monitor performance of one or more units, a remote system configured to store service data associated with the one or more units, and a processor operably coupled to the controller and the remote system. The processor is configured to receive monitoring data from the controller for the one or more units, and receive service data for the one or more units. The remote system is also configured to generate a health score based at least in part on the monitoring data and the service data. The processor is further configured to predict a failure based at least in part on the health score, and execute an action based at least in part on the generated health score.

## Description

### BACKGROUND

The present disclosure relates generally to remote monitoring systems, and more specifically, to maintenance scheduling based on remote monitoring data and service data analytics.

Elevators provide a convenient and efficient means for transporting passengers and objects during operation. In order to maintain proper functioning of the elevators, the repairs and maintenance must be timely performed. Failures of elevators systems can lead to downtime which creates a disturbance for its customers. When customers call to report these issues the reports are referred to as callbacks. There is a need to optimize maintenance scheduling to reduce the number of customer callbacks and minimize the unscheduled downtime of the elevator systems.

### BRIEF SUMMARY

According to an embodiment, a system for scheduling maintenance based on remote monitoring data and service data analytics is provided. The system includes a controller configured to monitor performance of one or more units, a remote system configured to store service data associated with the one or more units, and a processor operably coupled to the controller and the remote system. The processor is configured to receive the monitoring data from the controller for the one or more units, receive service data for the one or more units, and generate, by the remote system a health score based at least in part on the monitoring data and the service data. The processor is further configured to predict a failure based at least in part on the health score, and execute an action based on the health score.

In some embodiments the one or more units are elevator units.

Some embodiments include a processor that is configured to receive a pre-determined schedule of services for the one or more units, and modify the pre-determined scheduled based at least in part on the generated health score.

In some embodiments, the action includes prioritizing services for one or more elevator units based at least in part on the generated health score.

Some embodiments include a processer that is configured to transmit a prioritized service schedule to an external device.

Some embodiments include a processor that is configured to obtain supplemental information including at least one of landing door status information or landing floor information, and transmit the supplemental information with the prioritized service schedule.

Some embodiments include a processor that is configured to receive input from an operator based at least in part on the monitoring data and the service data for the one or more elevator units.

Some embodiments include service data such as callback data, maintenance data, and repair data.

Some embodiments include a processor that is configured to generate the health score responsive to a threshold number of events for the one or more units, wherein the events include alarm information, performance information, and callback information.

According to another embodiment, a method for scheduling maintenance based on remote monitoring data and service data analytics is provided. The method includes receiving monitoring data for one or more units, receiving service data for the one or more units, and generating a health score based at least in part on the monitoring data and the service data. The method also includes predicting a failure based at least in part on the health score, and executing an action based on the health score.

Some embodiments include one or more units that are elevator units.

Some embodiments include receiving a pre-determined schedule of services for the one or more units, and modifying the pre-determined scheduled based at least in part on the generated health score.

Some embodiments include an action that includes prioritizing services for one or more elevator units based at least in part on the generated health score.

Some embodiments include transmitting a prioritized service schedule to an external device.

Some embodiments include obtaining supplemental information including at least one of landing door status information or landing floor information, and transmitting the supplemental information with the prioritized service schedule.

Some embodiments include receiving input from an operator based at least in part on the monitoring data and the service data for the one or more elevators units.

Some embodiments include service data such as callback data, maintenance data, and repair data.

Some embodiments include generating the health score based at least in part on a threshold number of events for the one or more units, wherein the events include alarm information, performance information, and callback information.

Technical effects of embodiments of the present disclosure include generating a health score and prioritizing a maintenance schedule based on health scores generated from the monitored performance data and service record information.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a processing system for practicing the techniques described herein;
FIG. 2 depicts a schematic illustration of an elevator system that may employ various embodiments of the present disclosure;
FIG. 3 depicts another system for scheduling maintenance based on remote monitoring data and service data analytics in accordance with one or more embodiments;
FIG. 4 depicts landing doors of an elevator system in accordance with one or more embodiments;
FIG. 5 depicts elevator doors of an elevator system in accordance with one or more embodiments;
FIG. 6 depicts a generated schedule in accordance with one or more embodiments; and
FIG. 7 depicts a flowchart of a method for scheduling maintenance based on remote monitoring data and service data analytics in accordance with one or more embodiments.

### DETAILED DESCRIPTION

Remote elevator monitoring provides a means for tracking the performance and proper functioning of one or more elevators units. This can include data that is detected by sensors coupled to an elevator controller. An additional source of data can come from operators and/or engineers that study and analyze the information captured by the remote monitoring system. Historical and current condition information for the elevator system can also be analyzed to provide extra performance information.

Another source of performance information includes callback data that are reported by customers logging issues and concerns that arise with their elevator systems. Callbacks can indicate a need for service where a customer is experiencing an abnormal operation of the system. Responsive to receiving the callback a service mechanic must be dispatched to the location to either repair or service the system. Unfortunately, customers may experience additional delay while waiting for the scheduled service mechanic to arrive on the job site.

The unplanned maintenance not only impacts the customers, but also impacts the regularly scheduled maintenance for the other elevator units which may have to be rescheduled due to limited resources. Unplanned maintenance can increase the downtime for the system where replacement equipment may not be readily available to perform the repair. In addition, when the service mechanic arrives at the jobsite, the service mechanic may be unprepared to address the issue due to the limited information they received prior to their arrival.

Remote elevator monitoring data provides performance information that can be used to predict the health of an elevator unit. The predictive health information can then be used to prioritize and classify elevator units for scheduling a service before the elevator unit fails. This improves the efficiency and scheduling of services for the elevator units. In addition, the techniques described herein can reduce the number of callbacks thereby alleviating the need for unplanned visits by service mechanics. The techniques described herein can also be applied to other systems that use sensors to monitor systems and stores service records.

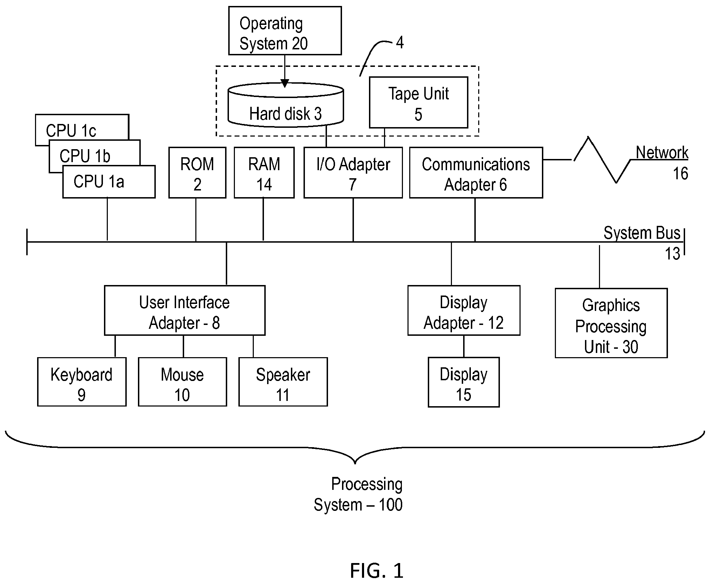

Referring to FIG. 1, there is shown an embodiment of a processing system 100 for implementing the teachings herein. In this embodiment, the system 100 has one or more central processing units (processors) 1a, 1b, 1c, etc. (collectively or generically referred to as processor(s) 1). In one embodiment, each processor 1 may include a reduced instruction set computer (RISC) microprocessor. Processors 1 are coupled to system memory 14 and various other components via a system bus 13. Read only memory (ROM) 2 is coupled to the system bus 13 and may include a basic input/output system (BIOS), which controls certain basic functions of system 100.

FIG. 1 further depicts an input/output (I/O) adapter 7 and a network adapter 6 coupled to the system bus 13. I/O adapter 7 may be a small computer system interface (SCSI) adapter that communicates with a hard disk 3 and/or tape storage drive 5 or any other similar component. I/O adapter 7, hard disk 3, and tape storage device 5 are collectively referred to herein as mass storage 4. Operating system 20 for execution on the processing system 100 may be stored in mass storage 4. A network adapter 6 interconnects bus 13 with an outside network 16 enabling data processing system 100 to communicate with other such systems. A screen (e.g., a display monitor) 15 is connected to system bus 13 by display adaptor 12, which may include a graphics adapter to improve the performance of graphics intensive applications and a video controller. In one embodiment, adapters 7, 6, and 12 may be connected to one or more I/O busses that are connected to system bus 13 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 13 via user interface adapter 108 and display adapter 12. A keyboard 9, mouse 10, and speaker 11 all interconnected to bus 13 via user interface adapter 8, which may include, for example, a Super I/O chip integrating multiple device adapters into a single integrated circuit.

In embodiments, the processing system 100 includes a graphics processing unit 30. Graphics processing unit 30 is a specialized electronic circuit designed to manipulate and alter memory to accelerate the creation of images in a frame buffer intended for output to a display. In general, graphics processing unit 30 is very efficient at manipulating computer graphics and image processing, and has a highly parallel structure that makes it more effective than general-purpose CPUs for algorithms where processing of large blocks of data is done in parallel.

Thus, as configured in FIG. 1, the system 100 includes processing capability in the form of processors 1, storage capability including system memory 14 and mass storage 4, input means such as keyboard 9 and mouse 10, and output capability including speaker 11 and display 15. In one embodiment, a portion of system memory 14 and mass storage 4 collectively store an operating system to coordinate the functions of the various components shown in FIG. 1.

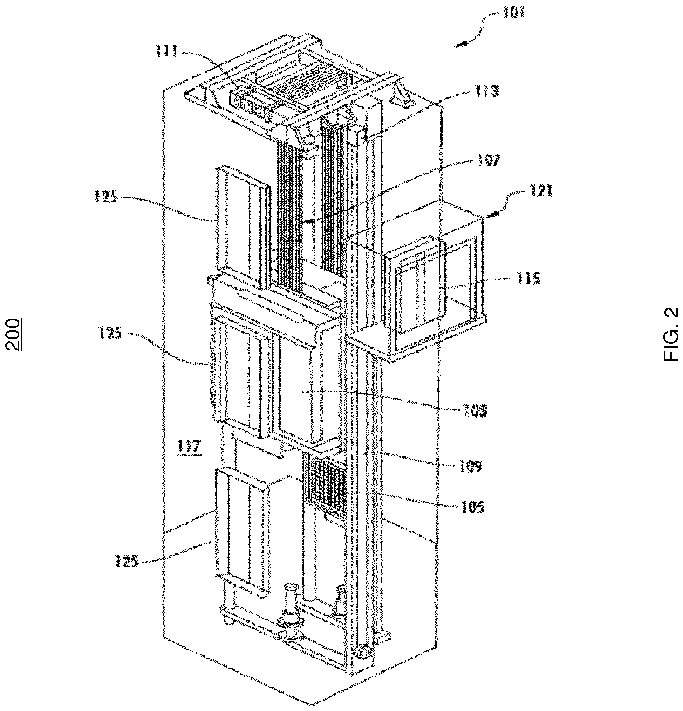

FIG. 2 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

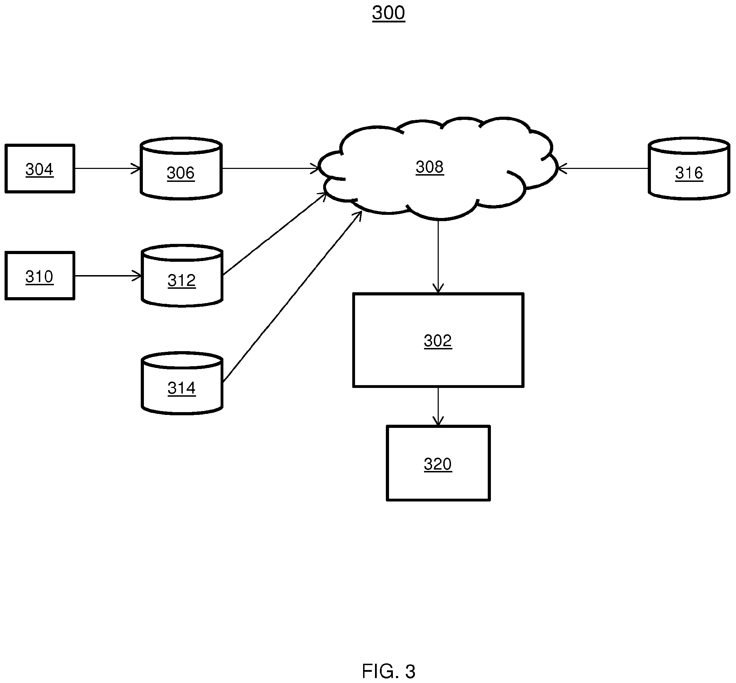

Now referring to FIG. 3, a system 300 for scheduling services based on remote monitoring data and service data analytics in accordance with one or more embodiments is shown.

The system 300 shown in FIG. 3 includes a processing module 302 that can be configured to receive performance data from the elevator controller 304. The elevator controller 304 can be the elevator controller described with reference to FIG. 2 which provides data based on the remote elevator monitoring. Remote elevator monitoring collects the performance data of the elevator units and can provide information as to the symptoms the elevator units are exhibiting from the elevator controller 304. The performance data can be analyzed and used to predict if and when a failure will occur. The elevator controller 304 can send data to the database 306 that can be located in a cloud network 308 or some other remote/external location. The elevator controller 304 can be configured with the appropriate interfaces to communicate with the database 306, network 308, and other systems over a wired and/or wireless communication channel(s). Also, the elevator controller 304 can obtain elevator unit data including, but not limited to performance data, alarm information, and alert information associated with one or more elevators units. This data can be detected by sensors (not shown) positioned on the elevator unit to monitor the different operations of the elevator unit such as the proper functioning and timely operation of the elevator doors and landing doors. For example, the data can include information relating to an issue with the door lock system not engaging temporarily causing a delay in operation. In addition, data can include information relating to a malfunctioning interlocking mechanism between the elevator unit door and the landing door. The database 306 can store data identifying the elevator unit, the location, and time of the occurrence of the event. This information can be provided to a service mechanic prior to their arrival on the job site or to an operator to prepare a maintenance schedule for a group of elevator units.

FIG. 3 also depicts a source 310 which can represent a regional legacy IT system, or any other data system, which provides data regarding the service for one or more elevators units. The source 310 may also include manually entered data or data from any other desired source. The source 310 can be configured to send data to a database 312 which stores the service data that include but is not limited to information related to any maintenance, callbacks, repairs, or any other service record information. The maintenance information can include a standard or predetermined schedule of tasks that are to be completed for each of the elevator units. The callback data include information on customers' complaints where a service mechanic is likely to be dispatched to service the elevator unit. The repair data can include information regarding scheduled and unscheduled repairs that are to be performed on the elevator units. The repair data can also indicate the type of repair, duration of the repair, downtime, etc. All of the information can be collected over time and used to identify trends or patterns that can be factored in optimizing a maintenance schedule. By prioritizing the services provided to the elevator units based on the predicted health of the elevator unit, the number of callbacks from customers can be reduced and the availability of the elevators units can be increased.

The databases 306 and 312 can also store supplemental data including landing door information identifying the location and the operational status of the landing doors. In addition, input from operators and/or engineers can be stored and used to prioritize the service schedules for the landing doors. The input can include data on the presence of an alarm or alert in addition to what has been detected by the elevator controller 304.

The network 308 also includes a predictive maintenance database 314 that is configured to store current data and another predictive maintenance database 316 that is configured to store archived data. Although the predictive maintenance databases 314 and 316 are shown separately in different locations, it should be understood the databases 314 and 316 can be combined and stored together in any desired location.

The processing module 302 can be configured to receive data from the elevator controller 304 and the source 310 to develop a model for scheduling maintenance to reduce the number of callbacks from customers and reduce any other issues or problems with the units. In one or more embodiments, data from the sources 310 are combined with the data from the elevator controller 304 to develop the model. Subsequent to determining trends and/or patterns of the elevator units, a health score of the unit can be determined and a maintenance schedule can be modified to preempt failures of the elevator units.

After the model has been generated by processing module 302, the model can be transmitted to one or more devices or external systems to provide the updated schedule for servicing the elevator units. The model can be presented in a graphical form or tabular form to a service mechanic. In addition, the model can be used to update a dashboard provided to an operator on a user device such as a mobile device or tablet. In addition, a graphical representation can be provided such as a map having various characteristics indicating a location and a severity based on the determined health score.

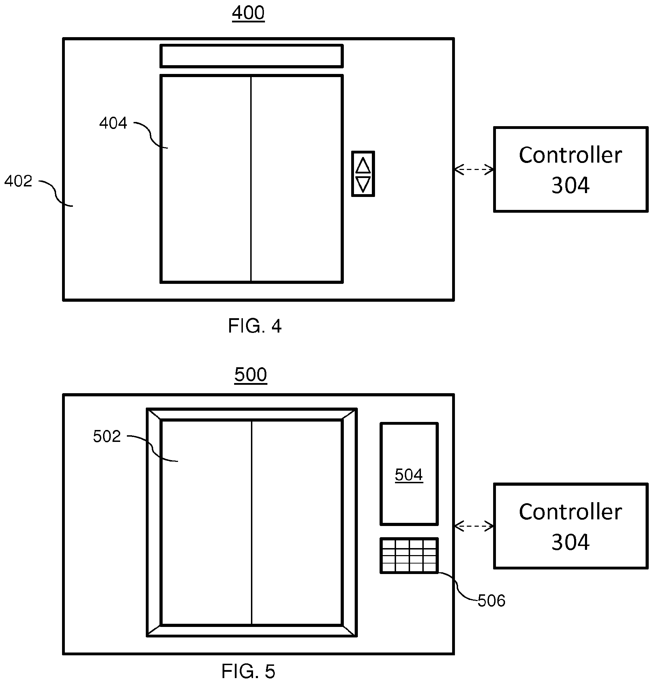

Now referring to FIG. 4, a view 400 of the landing doors of an elevator system in accordance with one or more embodiments is shown. As shown in FIG. 4, the system 400 includes the elevator unit 402 and its corresponding landings doors 404. In some embodiments, elevator systems are configured with landing doors 404 that are located at each landing and can be used in addition to or replace the elevator unit doors described in FIG. 5 below. The landing doors 404 are operably coupled the elevator controller 304, and the performance data associated with landing doors 404 can be monitored by controller 304 or other remote monitoring system. The performance data can include data about faulty door performance indicating the doors are not opening and closing properly.

With reference now to FIG. 5, a view of the interior of an elevator unit 500 in accordance with one or more embodiments is shown. The elevator unit 500 includes elevator doors 502, a display 504, and call buttons 506. In some configurations, the elevator unit 500 upon reaching a landing may open up to the landing doors 404 shown in FIG. 4. The elevators doors 502 are operably coupled to the elevator controller 304. The elevator controller 304 can monitor the performance of the elevator doors 502 and landing doors 404 by reading data from sensors (not shown) located on the elevator unit and doors to gauge the operation of the doors. In addition, sensors can be configured to provide landing floor identifier information. The identifier can provide supplemental information which can be used to track the history of each of the elevators (units). Other systems such as escalators, lifts, etc. can be monitored. It is to be understood that the techniques described herein can be applied to any system that monitors sensor data and stores service records.

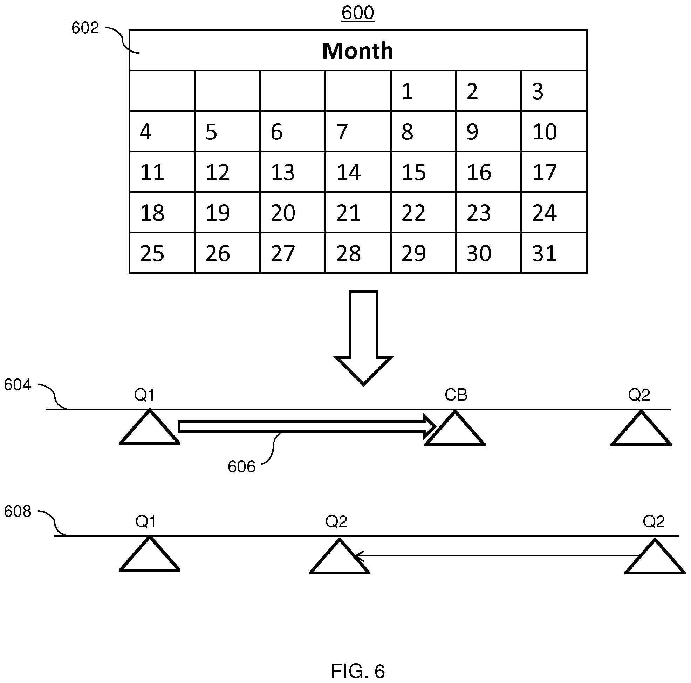

Now referring to FIG. 6, a schedule generated by the system in accordance with one or more embodiments is shown. FIG. 6 depicts an example model produced by the processing module 302. The output can include a calendar 602 showing the original service schedule and the updated service schedule for a unit.

FIG. 6 depicts a predetermined schedule 604 of maintenance for an elevator unit. The schedule 604 indicates a first scheduled maintenance is to occur at a first date (Q1) and a subsequent scheduled maintenance is scheduled to be performed at a second date (Q2). The schedule 604 also indicates the date a callback (CB) has been received which occurs prior to the scheduled maintenance occurring at the date Q2. The arrow 606 indicates the time period that has elapsed after the initial scheduled maintenance up to the point where the callback CB was received. The current monitored performance information, alarm information, service information, and callback information are used to generate a health score. The health score indicates the probability that a failure is likely to occur. The higher the health score the more likely the failure is to occur. On the other hand, the lower the health score, the less likely the failure is to occur. Responsive to generating the health score, the subsequent scheduled maintenance date Q2 can be moved up to perform the maintenance before the predicted failure occurs. In addition, the severity of the health score can indicate how soon the maintenance should be scheduled in advance of the callback date.

The updated schedule 608 depicts the modification of the original schedule 604 according to the generated health score. The schedule 606 provides the advancement of the subsequent scheduled maintenance date Q2 date to the new date Q2 which occurs before the callback date CB shown in schedule 604. In addition, schedule 608 illustrates the advancement of the service date is based at least in part on the severity of the health score. In another embodiment, as data is collected over time, the health score can be optimized to provide a more accurate probability of when an actual failure will occur. The data that are factored into generating the health score include the unit data, performance data, service records, and callback data. For example, in the event similar data are received as that represented in the updated schedule 608, and a call back and/or failure occurs before the new CB date, the health score can be increased to indicate a higher probability of failure. In addition, the CB date can be moved up to an earlier data based on the increased health score. The advancement of the service date can be impacted by the availability of the service mechanics. However, as long as the service occurs prior to the predicted failure date CB, the elevator unit is likely to avoid any unscheduled downtime due to the issue.

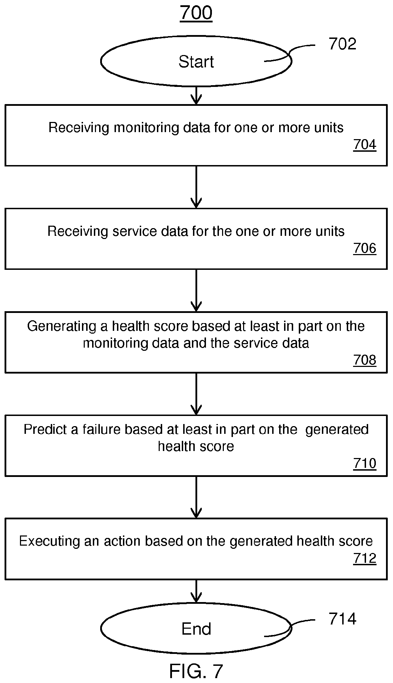

Now referring to FIG. 7, a flowchart for a method 700 for scheduling maintenance based on remote monitoring data and service data analytics in accordance with one or more embodiments is shown. The method 700 begins at block 702 and continues to block 704 that provides for receiving monitoring data for one or more units. In one or more embodiments, the one or more units are elevator units wherein the monitoring data is elevator data that is received from an elevator controller. The monitoring data can include performance data, alarm information, alert information, or any other information that is related to the operation of the system.

At block 706, the method 700 provides for receiving service data for the one or more units. In one or more embodiments, the service data is received from a regional legacy IT system and can include data that is different that the elevator data. The service data can include maintenance information, callback information, repair information, or any other information that is related to service records that have been maintained for the system.

The method 700 proceeds to block 708 and provides for generating a health score based at least in part on the monitoring data and the service data. In other embodiments, data from an administrator, operator, or engineer can be input into the processing module 302 and used to generate the health score for the one or more units. In other embodiments, the data can be used to improve or modify the generated health score to reflect a more accurate probability of when a failure is to occur. For example, a previously generated score can be updated according to the most recent information such as performance data, service records, unit data, callbacks, etc. that has been received.

At block 710, the method 700 provides for predicting a failure based at least in part on the health score. The health score indicates a probability that the experienced conditions will lead to a failure and ultimately a callback based on the collected performance and condition information. In one or more embodiments, the health score can be generated responsive to a threshold number of events for the one or more units, wherein the events include alarm information, performance information, callback information, etc. In other embodiments, the health score can be generated at a configurable frequency/interval. In one or more embodiments, the mean-time-between-failure or an average number of days for a failure to occur can be used to determine a health score. The period or interval at which the calculation is performed can be a configurable parameter.

The generated health score for a group of elevators can be used to prioritize the scheduling for the group of elevators, where the elevator or group of elevators having the lowest health scores will be scheduled first and the elevator or group of elevators having the highest health scores will be scheduled last.

The health score can also be used to classify an elevator into a group of elevators having a similar score, such as a score that falls within a particular range. For example, a health score range indicating attention is required can be from 1-3, a middle health score range can include scores from 4-7, and a healthy elevator can include health scores from 8-10. It should be understood that other ranges and classes can be used based on the needs and granularity of control desired by the system. Responsive to classifying the elevator units according to their health scores, the service for each class of elevator units are scheduled and/or modified to preempt any failure of the elevator units.

Block 712 provides for executing an action based on the health score. In one or more embodiments, the executed action can include reorganizing an existing service schedule for an elevator or a group of elevators to preempt a callback from a customer. In one or more embodiments, service mechanics can be dispatched to provide maintenance on the elevators according to the updated schedule. The method 700 ends at block 714.

The technical effects and benefits provide the ability to adjust maintenance schedules based on the health of the units or equipment of the system in combination with other parameters that are commonly used in scheduling today. The technical effects and benefits also provide for smarter and more efficient scheduling of services to reduce the likelihood of callbacks (e.g. unplanned visits/shutdowns).

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system for scheduling maintenance based on remote monitoring data and service data analytics, the system comprising:
a controller configured to monitor performance of one or more units;
a remote system configured to store service data associated with the one or more units; and
a processor operably coupled to the controller and the remote system configured to:
receive monitoring data from the controller for the one or more units;
receive service data for the one or more units;
generate a health score based at least in part on the monitoring data and the service data;
predict a failure based at least in part on the generated health score; and
execute an action based at least in part on the generated health score.

2. The system of claim 1, wherein the one or more units are elevator units.

3. The system of claim 2, wherein the processor is configured to receive input from an operator based at least in part on the monitoring data and the service data for the one or more elevator units.

4. The system of claim 2 or 3, wherein the action includes prioritizing services for one or more elevator units based at least in part on the generated health score.

5. The system of any preceding claim, wherein the processor is configured to receive a pre-determined schedule of services for the one or more units; and
modify the pre-determined scheduled based at least in part on the generated health score.

6. The system of any preceding claim, wherein the processer is further configured to transmit a prioritized service schedule to an external device.

7. The system of claim 6, wherein the processor is further configured to obtain supplemental information including at least one of landing door status information or landing floor information; and
transmit the supplemental information with the prioritized service schedule.

8. The system of any preceding claim, wherein the service data includes callback data, maintenance data, and repair data.

9. The system of any preceding claim, wherein the processor is further configured to generate the health score responsive to a threshold number of events for the one or more units, wherein the events include alarm information, performance information, and callback information.

10. A method for scheduling maintenance based on remote monitoring data and service data analytics, the method of comprising:
receiving monitoring data for one or more units;
receiving service data for the one or more units;
generating a health score based at least in part on the monitoring data and the service data;
predicting a failure based at least in part on the generated health score; and
executing an action based on the generated health score.

11. The method of claim 10, wherein the one or more units are elevator units.

12. The method of claim 11, wherein the action includes prioritizing services for one or more elevator units based at least in part on the generated health score;
optionally further comprising transmitting a prioritized service schedule to an external device; and
optionally further comprising obtaining supplemental information including at least one of landing door status information or landing floor information; and
transmitting the supplemental information with the prioritized service schedule.

13. The method of claim 11 or 12, further comprising receiving input from an operator based at least in part on the monitoring data and the service data for the one or more elevators units.

14. The method of any of claims 10 to 13, further comprising receiving a pre-determined schedule of services for the one or more units; and
modifying the pre-determined scheduled based at least in part on the generated health score.

15. The method of any of claims 10 to 14, further comprising generating the health score responsive to a threshold number of events for the one or more units, wherein the events include alarm information, performance information, and callback information.
